# EUROPEAN PATENT SPECIFICATION

(11) **EP 0 622 274 B1**
(45) Date of publication and mention of the grant of the patent: **05.01.2000**
(21) Application number: 94106693.8
(22) Date of filing: 28.04.1994
(51) Int. Cl.: B60R 16/02, H01R 4/24

(54) **Junction connector, wire harness, and method of manufacturing the wire harness**
Elektrischer Steckverbinder, Kabelbaum und Verfahren zur Herstellung des Kabelbaums
Connecteur électrique, faisceau électrique et procédé pour fabriquer un tel faisceau

(30) Priority: 28.04.1993 JP 12537993; 28.04.1993 JP 12538093; 11.05.1993 JP 13380993
(43) Date of publication of application: 02.11.1994
(73) Proprietor: Sumitomo Wiring Systems, Ltd., Yokkaichi-shi Mie-ken (JP)
(72) Inventor: Ito, Katsuya, c/o Sumitomo Wiring Systems, Ltd., Yokkaichi-shi, Mie-ken (JP)
(74) Representative: R.A. KUHNEN & P.A. WACKER

(56) References cited:
- EP-A- 0 263 701
- WO-A-89/12335
- FR-A- 2 626 124
- GB-A- 2 115 236
- GB-A- 2 229 588

## Description

### BACKGROUND OF THE INVENTION

This invention relates to junction connectors and bulb sockets for mutual connection, a wiring system, and methods of manufacturing a wiring system. More particularly, this invention relates to a junction connector which may be suitably employed for a sub wiring harness or the like in a vehicle, and to a wire harness and a manufacturing method of the wire harness which is suitable for manufacture of sub harnesses for vehicle lamps.

For instance, in the case of rear combination lamps on a vehicle, a sub harness is employed to connect them to the power source. The sub harness has electrical wires which are to be connected to the positive terminals of the lamps. And the sub harness also has electrical wires branched from one common electrical wire which are to be connected to the negative terminals. The electrical wires are branched from the common electrical wire as follows: First the insulator is removed from the middle of one electrical wire to expose the core wire, and similarly the insulator is removed from the end portion of another electrical wire to expose the core wire. Those exposed core wires are wrapped together with a metal piece, and crimped, and covered with an insulating tape.

And, in manufacturing a wire harness by connecting engaging terminals to the common electrical wire, the following two methods are employed: In one of the methods, branching points are determined by marking the electrical wire, and branching wires are connected to the electrical wire at the branching points thus marked, and engaging terminals are connected to the branching wires thus connected. In the other method, branch terminals are directly connected to the electrical wire being pushed against it at the branching points.

The above-described wire connection takes time and labor including the step of removing the insulator from the electrical wires; that is, the connection is low in work efficiency.

However, in FR-A-2626124 is a connecting device for a telephone control member disclosed in which a contact fork provides an electric connection to a wire by pressing the contact fork to the wire in a right angle within a casing. The connecting device comprises the contact fork having a cut which is opened in the direction of the axis thereof and the casing including a wire supporting cylinder into which an insulated wire is inserted. The casing further includes a terminal supporting hole into which the contact fork is inserted and which communicates with the wire supporting cylinder in a right angle. This connecting device shows no possibility for a watertight connection.

Further a contact member is disclosed in WO-A-89/12335 that shows two legs and an intermediate slit and is intended, on being transversely thrust against an insulated conductor, to penetrate the insulation and make electrical contact with the conductor.

Furthermore, in the above-described methods, the branching points of the electrical wire are detected, and the terminals are connected one at a time. That is, the methods are low in work efficiency.

In view of the foregoing, an object of this invention is to provide a bulb socket and a junction connector with which the wiring of an electrical wire to be branched can be achieved with ease, whereby a watertight connection is formed.

Another object of the invention is to provide a wiring system in which the wiring of a wire to be branched can be readily achieved.

Still further, another object is to provide a method of manufacturing a wire harness with ease which has engaging terminale through which a common electrical wire is branched.

### SUMMARY OF THE INVENTION

The foregoing objects of the invention has been achieved by the provision of a bulb socket having a hole and a junction connector according to claims 1, 4 and 6.

### BRIEF DESCRIPTION OF THE DRAWINGS

FIG. 1 is a perspective view of a sub harness using junction connectors according to the present invention.
FIGS. 2 and 3 are an exploded perspective view and a sectional view, respectively, showing one of the junction connectors, namely, a through-type junction connector.
FIGS 4 and 5 are an exploded perspective view and a sectional view, respectively, showing the other junction connector, namely, a closed-type junction connector.
FIG. 6 is a transparent perspective view of a bulb socket.
FIG. 7 is a perspective view showing another branch terminal according to the invention.
FIG. 8 is a perspective view of a through-type junction connector using the branch terminal shown in FIG. 7.
FIG. 9 is a perspective view of a closed-type junction connector using the branch terminal shown in FIG. 7.
FIG. 10 is an exploded perspective view for a description of a wire harness manufacturing procedure according to the invention.
FIG. 11 is a perspective view showing another sub harness according to the invention.
FIGS. 12 and 13 are a perspective view and a sectional view, respectively, showing another through-type junction connector.
FIGS. 14 and 15 are a perspective view and a sectional view, respectively, showing another closed type junction connector.
FIG. 16 is a transparent perspective view of another bulb socket.

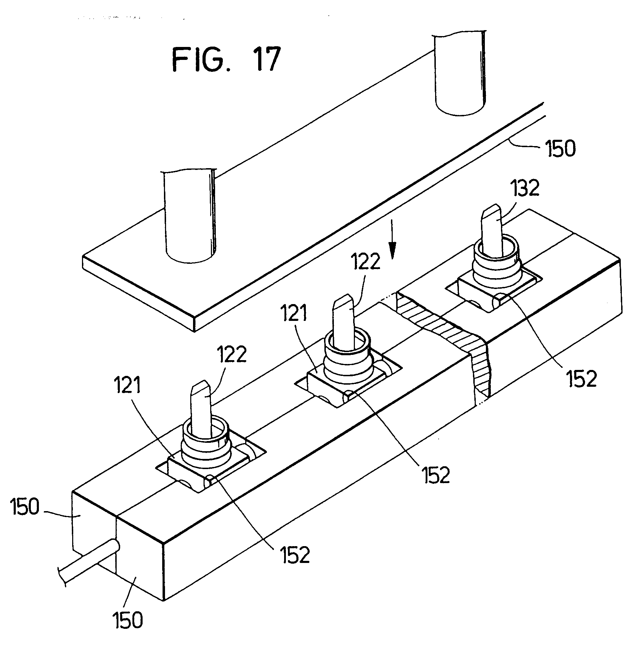

FIG. 17 is a perspective view of a jig for a description of the wire harness manufacturing procedure according to the invention.

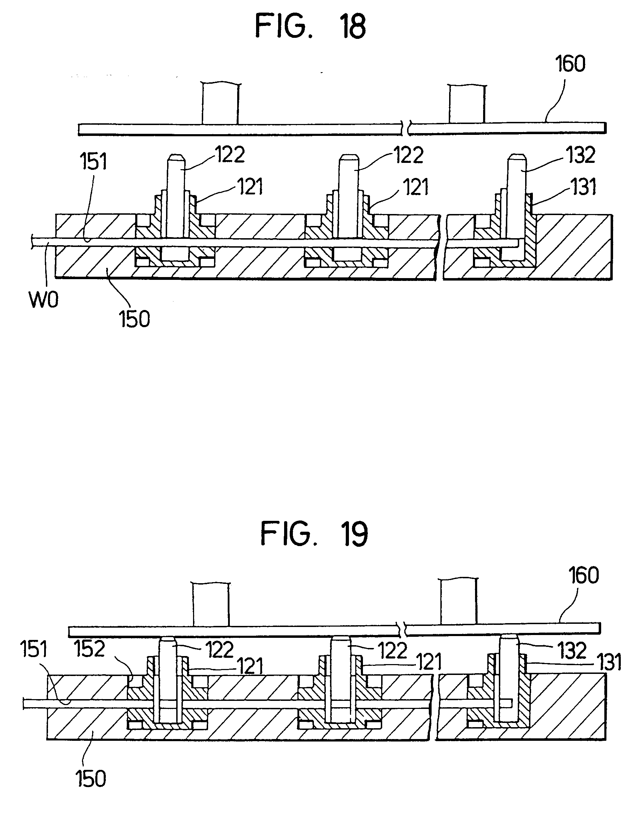

FIGS. 18 and 19 are sectional views of a jig for a description of the wire harness manufacturing procedure according to the invention.

### DETAILED DESCRIPTION OF THE PREFERRED EMBODIMENTS

Preferred embodiments of this invention will be described with reference to the accompanying drawings.

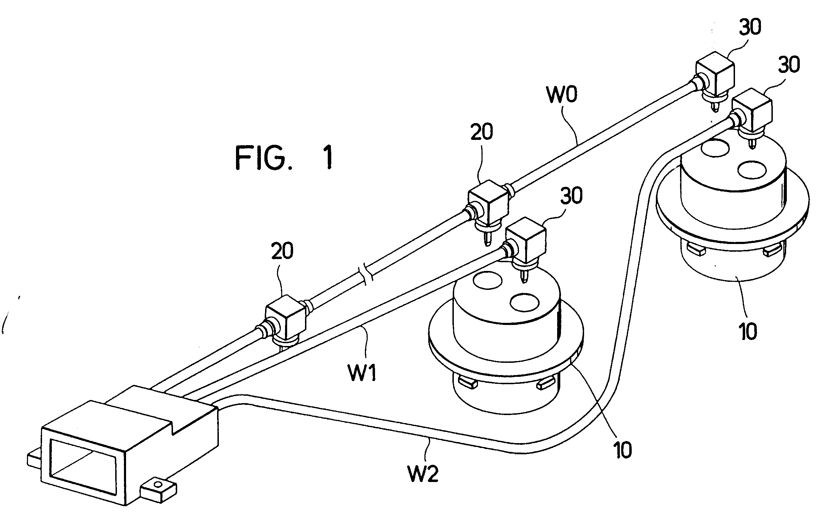

FIG. 1 is a perspective view of junction connectors according to one embodiment of the invention. The junction connectors are applied to a sub harness for rear combination lamps of a motor vehicle.

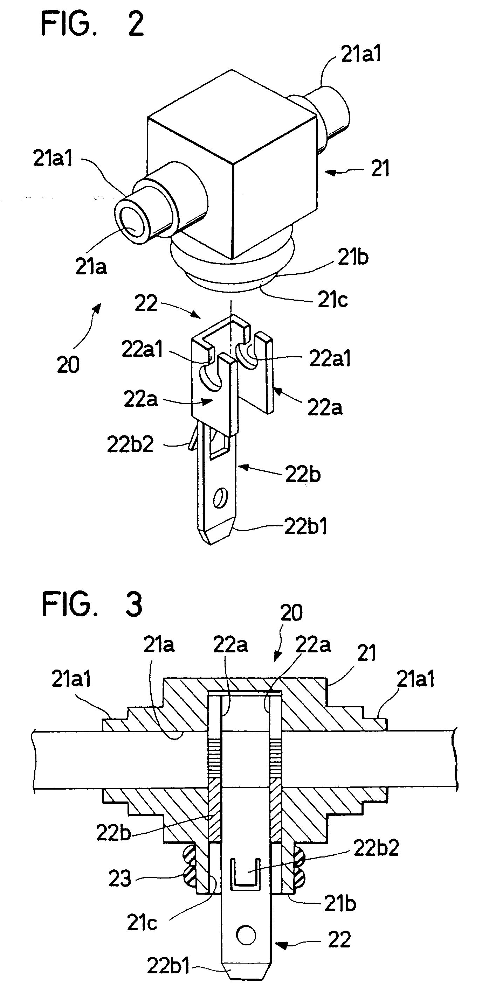

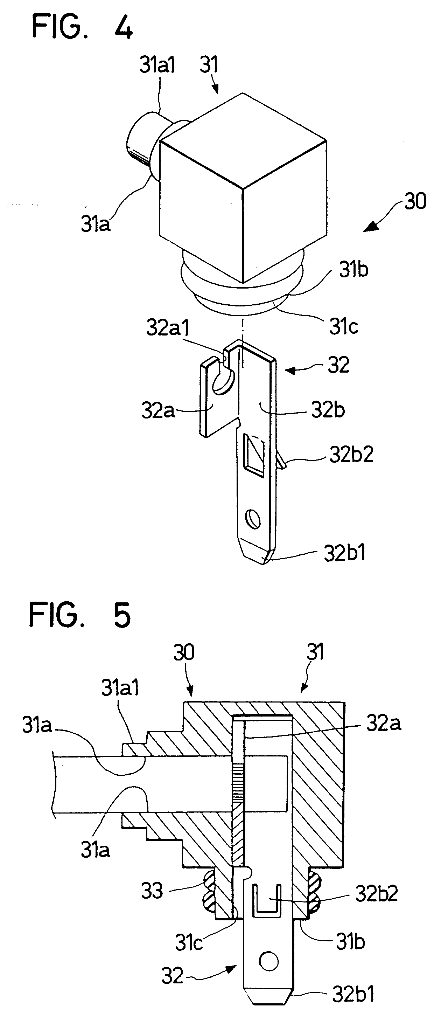

As shown in FIG. 1, an electrical wire W0 on the negative side is provided, as a common wire, for all bulb sockets 10, and through-type junction connectors 20 as shown in FIG. 2 are connected to the wire W0 at predetermined points, and a closed-type junction connector 30 as shown in FIG. 4 is connected to the end of the wire. Further in FIG. 1, reference characters W1 and W2 designate electrical wires on the positive side which are provided for the bulb sockets 10, respectively, each having the aforementioned closed-type junction connector 30 at the end.

The through-type junction connector 20 comprises a housing 21 and a branch terminal 22. The housing 21, as shown in FIG. 3, includes a wire supporting cylinder 21a which is hollow and opened at both ends so as to receive a wire. And welding sleeves 21a1 is formed at both ends which is smaller in wall thickness than the body of the wire supporting cylinder 21a. The housing 21 further includes an inserting cylinder 21b which is hollow and extended downwardly from the body of the housing 21. More specifically, the housing has a terminal supporting hole 21c which is extended from the bottom of the inserting cylinder 21b to the middle of the wire supporting cylinder 21a. Sealing rubber packings 23 are mounted on the inserting cylinder 21b.

The branch terminal 22, as shown in FIG. 2, is formed by using a T-shaped metal plate having the right and left wing portions 22a and a straight portion 22b between the right and left wing portions. That is, the right and left wing portions 22a have cuts 22a1, respectively, and are bent to confront with each other. The lower end portion of the straight portion 22a of the metal plate is formed into a fitting terminal portion 22b1 to fit. The fitting terminal portion 22b1 has a pawl 22b2 which is raised therefrom, so that it is engaged with a locking hole formed in the wall of the terminal supporting hole 21c to prevent the branch terminal 22 from coming off the housing 21.

The closed-type junction connector 30 comprises a housing 31 and a branch terminal 32. The closed-type junction connector 30 is different in construction from the through-type junction connector 20 in that the housing 31 has a wire supporting cylinder 31a closed at one end while the housing 21 has the wire supporting cylinder opened at both ends, and the branch terminal 32 has one wing portion 22a while the branch terminal 22 has two wing portions. In other words, the structure of the junction connector 30 is fundamentally equal to that of the junction connector 30; in the housing, a terminal supporting hole 31c is communicated with the wire supporting cylinder 31a, and the latter 31a has a welding sleeve 31a1, and the housing has an inserting cylinder 31b on which rubber packing 33 are mounted

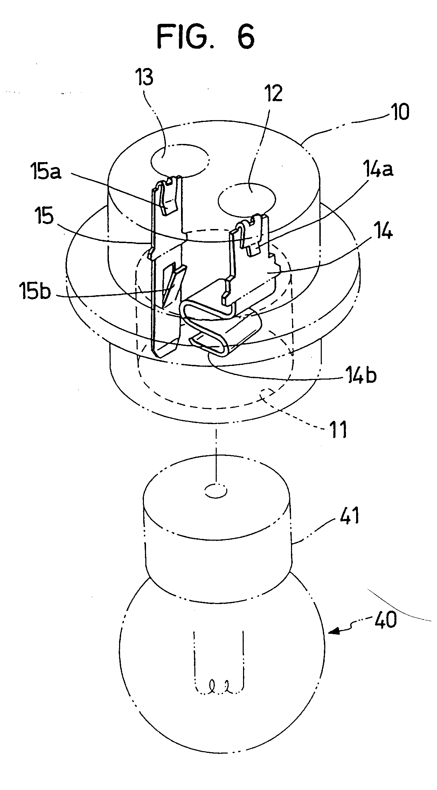

The bulb socket 10, as shown in FIG. 6, comprises: a cylindrical portion 11 which is opened downwardly to receive the electrode section 41 of a lamp 40; a positive terminal hole 12 which is communicated with the central portion of the bottom of the cylindrical portion 11 and is adapted to receive the inserting cylinder 21b or 31b from thereabove; and a negative terminal hole 13 which is communicated with the peripheral portion of the bottom of the cylindrical portion 11 and is adapted to receive the inserting cylinder 21b or 31b thereabove.

A positive terminal 14 is inserted into the positive terminal hole 12 from the side of the cylindrical portion 11. The upper end portion of the positive terminal 14 is formed into an engaging female terminal portion 14a which is engaged with the fitting terminal portion 22b1 or 32b1 of the junction connector 20 or 30, while the lower end portion of the positive terminal 14 is gently folded to form an elastic contact electrode portion 14b.

A plate-shaped negative terminal 15 is inserted into the negative terminal hole 13 from the side of the cylindrical portion 11. The upper end portion of the negative terminal 15 is formed into an engaging female terminal portion 15a which is engaged with the fitting terminal portion 22b1 or 32b1 of the junction connector 20 or 30, while the lower end portion of the positive terminal 14 has a leaf-spring-shaped contact electrode portion 15b which is raised inwardly from the latter.

A method of using the above-described embodiment will be described.

The electrical wires W0, W1 and W1 having predetermined lengths are prepared, and the connector is connected one end of each of the wires.

For the common electrical wire W0, the through-type junction connectors 20 are provided the number of which is smaller by one than the number of bulb sockets 10. The wire W0 is inserted into the wire supporting cylinders 21a of the through-type junction connectors 20, and then inserted into the wire supporting cylinder 31a of the closed-type junction connector 30 at the end of wire W0. The junction connectors 20 and 30 are spaced from one another according to the positions of the bulb sockets 10. Thereafter, the branch terminals 22 are inserted into the terminal supporting holes 21c of the junction connectors 20 beginning with the wing portions 22a, and similarly the branch terminal 32 is inserted into the terminal supporting hole 31c of the junction connector 30 beginning with the wing portion 32a.

In each of the junction connectors 20, the wire W0 has been inserted into the wire supporting cylinder 21a. Hence, when the branch terminal 22 is inserted into the terminal supporting hole 21c which is extended orthogonal with the wire supporting cylinder 21, the wing portions 22a of the branch terminal 22 are perpendicularly brought into contact with the wire W0. As was described above, the cuts 22a1 have been formed in the wing portions 22a in the direction of movement of the branch terminal. Therefore, when the branch terminal 22 is further pushed into the housing, the wire W0 is pushed against the openings of the cuts 22a1, so that the insulator of the wire W0 is cut by the cuts 22a1, and the core wire is pushed into the cuts 22a1. Thus, the electrical wire W0 is electrically connected to the branch terminal 22, being pushed against the latter. That is, in the branch terminal 22 of the junction connector 20, the wing portions 22a serve as pressing terminal portions.

When the branch terminal 22 is fully pushed into the terminal supporting hole 21c, the pawl 22b2 raised from the straight portion 22b is engaged with the locking hole formed in the wall of the terminal supporting hole 21, thus preventing the branch terminal 22 from coming off even when forcibly pulled.

In order to improve the water-proof of the wire W0 extended through the wire supporting cylinder 21a on both sides, the welding sleeves 21a1 defining the openings of the wire supporting cylinder 21a are welded by ultrasonic wave onto the electrical wire W0, and the rubber packing 23 are mounted on the inserting cylinder 21b. In the embodiment, as was described above, the welding sleeves defining the openings of the wire supporting cylinder are sealingly welded to the wire; however, the sealing may be achieved with other rubber packing. Furthermore, in the embodiment, the rubber packing 23 are mounted on the inserting cylinder 21b; however, the rubber packing may be mounted on the positive terminal hole 12 and the negative terminal hole 13 of the bulb socket 10. When it is required to use the junction connector as a non-water-proof junction connector, the rubber packing may be omitted.

On the other hand, in the junction connector 30, too, the wing portion 31a of the branch terminal 31 is abutted against the wire W0, W1 or W2 inserted into the wire supporting cylinder 31a, so that the insulator of the wire is cut by the cut 31a1 formed in the wing portion 32a, and the core wire is brought into contact with the wing portion 32a. Thereafter, the branch terminal 32 is fully pushed into the housing 31, and then the welding sleeve 31a1 is welded onto the electrical wire W0, W1 or W2.

In the branch terminal 32 of the junction connector 30, too, the wing portion 32a serves as a pressing terminal portion.

Next, the junction connectors 30 connected to the ends of the wires W1 and W2 are inserted into the positive terminal holes 12 of the bulb sockets 10 beginning with the inserting cylinders 31b. As a result, the fitting terminal portions 32b1 of the branch terminals 32 held in the terminal supporting holes 31c are engaged with the engaging female terminal portions 14a of the positive terminals, respectively. Thus, the branch terminals 32 have been electrically connected to the positive terminals 14, respectively. The junction connectors 20 connected to the electrical wire W0 at the predetermined points and the junction connector 30 are inserted into the negative terminal holes 13 of the bulb sockets 10 beginning with the inserting cylinders 21b and 31b. As a result, the fitting terminal portions 22b1 of the branch terminals 22 and the fitting terminal portion 32b1 of the branch terminal 32 are engaged with the engaging female terminal portions 15a of the negative terminals 15 held in the negative terminal holes 13. The rubber packing 23 and 33 mounted on the fitting cylinders 21b and 31b are held around the positive terminal holes 12 and the negative terminal holes 13, thus preventing the entrance of water through those holes.

In the above-described embodiment, the cuts are formed in the wings 22a and 32a of the branch terminals 22 and 32, respectively. However, the cuts may be formed in the upper portions of the straight pieces 22b and 32b, respectively. Furthermore, in the above-described embodiment, each of the cuts has a circular hole at the deep end. The circular hole is slightly larger in diameter than the wire, so as to allow the core wire to slightly expand thereby to prevent the wire from disengaging from the cut. However, the cut may be changed in configuration to prevent the disengagement of the wire from it. It goes without saying that the fitting terminal portions 22b1 and 32b2 may be of the male terminals.

In the above-described embodiment, the junction connectors have the male terminals, and the bulb sockets have the female terminals; however, they may be so modified that the junction connectors have the female terminals, and the bulb sockets have the male terminals.

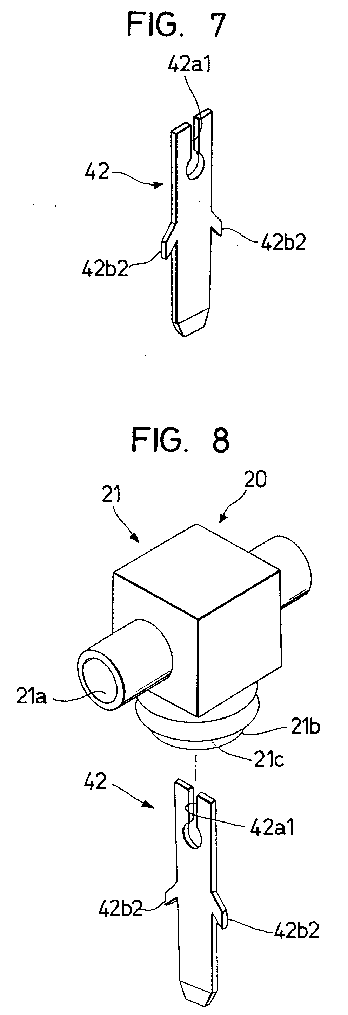

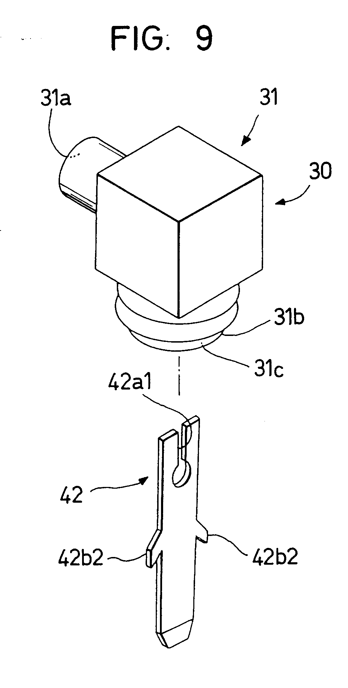

FIG. 7 is a perspective view of a branch terminal according to another embodiment of the invention. FIG. 8 is a perspective view of a junction connector with the branch terminal, and FIG. 9 is also a perspective of another junction connector with the branch terminal. In the second embodiment, the same branch terminal 42 is used for the through-type junction connector 22 and the closed-type junction connector 32.

The branch terminal 42 has pawls 42b2 extended on both sides instead of the raised pawls 22b2 or 32b2. The junction connectors 20 and 30 have terminal supporting holes 21c and 31c, respectively, so that the plate-shaped branch terminals 42 inserted therein are perpendicular to the axes of the wire supporting cylinders 21a and 31a, respectively.

First, the electrical wires W0, W1 and W2 are inserted into the wire supporting cylinders 21a and 31a, and then the branch terminals 42 are pushed into the terminal supporting holes 21c and 31c as required. As a result, the branch terminals 42 are electrically connected to the electrical wires through the cuts 42a1, and the pawls 42b prevent the branch terminals 42 from coming off the housing.

In the first embodiment, the open end portions of the wire supporting cylinders 21a and 31a are formed into the welding sleeves 21a1 and 31a1, respectively, which are smaller in wall thickness than the remaining portions so that they can be readily welded onto the wire; however, the invention is not limited thereto or thereby. That is, the opening portions of the wire supporting cylinders may not be reduced in wall thickness as shown in FIGS. 8 and 9.

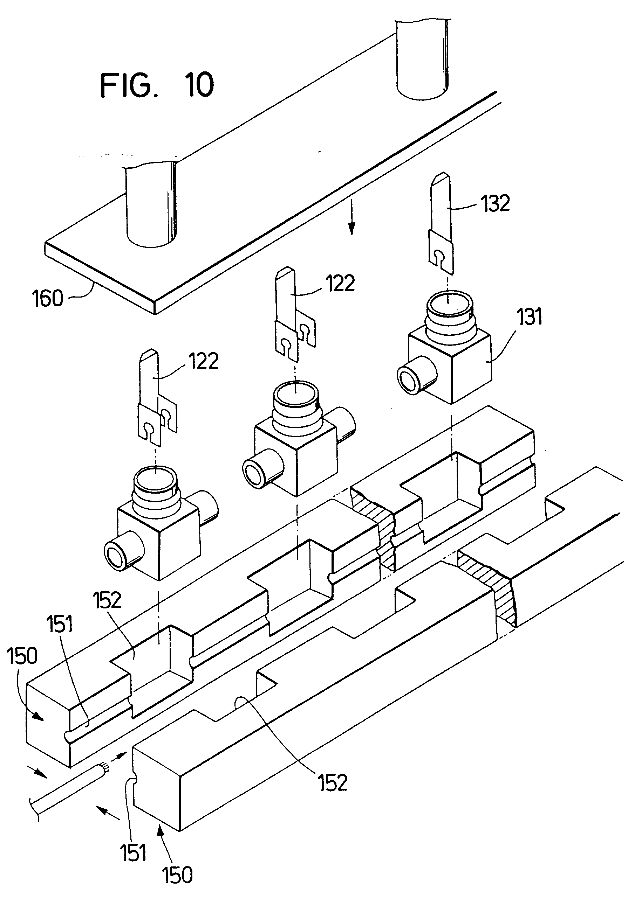

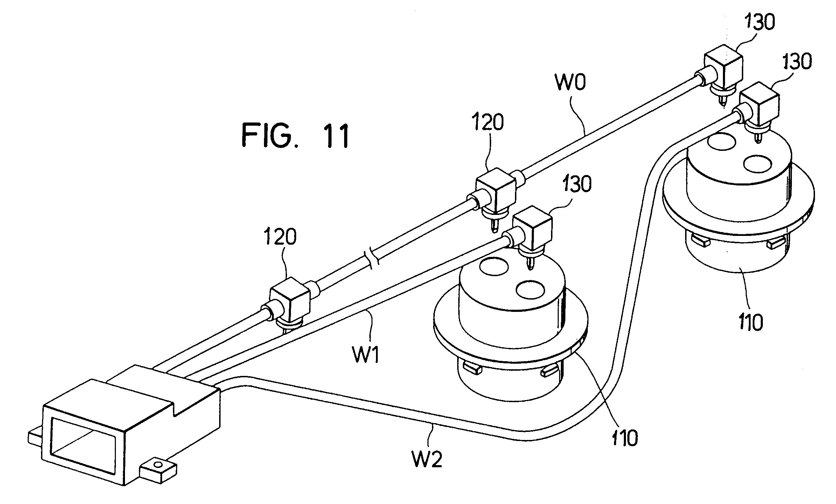

FIG. 10 is a perspective view for a description of a procedure of manufacturing a wire harness according to the invention. FIG. 11 is a perspective view of a sub harness for rear combination lamps of a motor vehicle to which the technical concept of the invention is applied. Prior to the wire harness manufacturing method, engaging terminals and the like for the wire harness will be described.

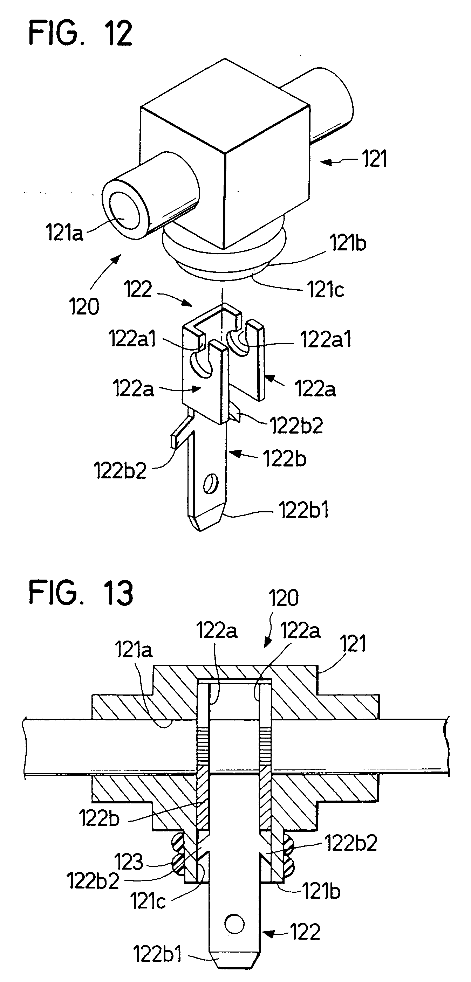

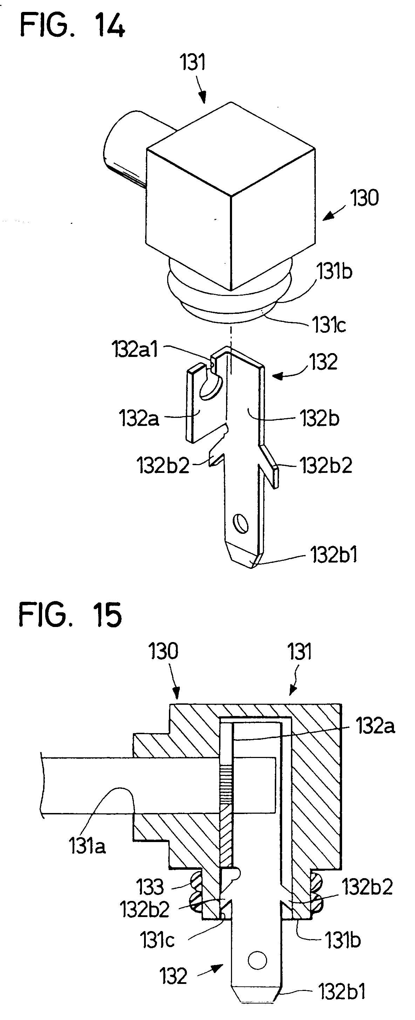

As shown in FIG. 11, an electrical wire W0 on the negative side is provided, as a common wire, for all bulb sockets 110, and through-type junction connectors 120 as shown in FIG. 12 are connected to the wire W0 at predetermined points, and a closed-type junction connector 130 as shown in FIG. 14 is connected to the end of the wire. Further in FIG. 11, reference characters W1 and W2 designate electrical wires on the positive side which are provided for the bulb sockets 110, respectively, each having the aforementioned closed-type junction connector 130 at the end.

The through-type junction connector 120 comprises a housing 121 and a branch terminal 122. The housing 121, as shown in FIG. 13, includes; a wire supporting cylinder 121a which is hollow and opened at both ends so as to receive an electrical wire; and an inserting cylinder 121b which is hollow and extended downwardly from the body of the housing 121. More specifically, the housing has a terminal supporting hole 121c which is extended from the bottom of the inserting cylinder 121b to the middle of the wire supporting cylinder 121a. Sealing rubber packing 123 are mounted on the inserting cylinder 121b.

The branch terminal 122 (engaging terminal) is formed by using a T-shaped metal plate having the right and left wing portions 122a and a straight portion 122b between the right and left wing portions as shown in FIG. 13. The right and left wing portions 122a have cuts 122a1 and 122a1, respectively, and are bent towards confronting with each other. The lower end portion of the straight portion 122a of the metal plate is formed into a fitting terminal portion 122b1. The fitting terminal portion 122b1 has pawls 122b2 which are raised therefrom, so that they are engaged with a locking hole formed in the wall of the terminal supporting hole 121c to prevent the branch terminal 122 from coming off the housing 121. In the embodiment, the cuts 122a1 are formed in the right and left wing portions 122a of the T-shaped metal plate; however, the branch terminal may be so modified that it has no wing portions 122a, and the cut is formed in the upper end portion of the straight portion 122b.

The closed-type junction connector 130 comprises a housing 131 and a branch terminal (engaging terminal) 132. The closed-type junction connector 130 is different in construction from the through-type junction connector 120 in that the housing 131 has a wire supporting cylinder 131a closed at one end while the housing 121 has the wire supporting cylinder opened at both ends, and the branch terminal 132 has one wing portion 122a while the branch terminal 122 has two wing portions. In other words, the structure of the junction connector 130 is fundamentally equal to that of the junction connector 130; in the housing, a terminal supporting hole 131c is communicated with the wire supporting cylinder 131a, and the housing has an inserting cylinder 131b, on which rubber packing 133 are mounted. The branch terminal 132 may be modified in the same manner as the branch terminal 122. That is, it may be so modified that it has no wing portion 132a, and the cut is formed in the upper end portion of the straight portion 132b.

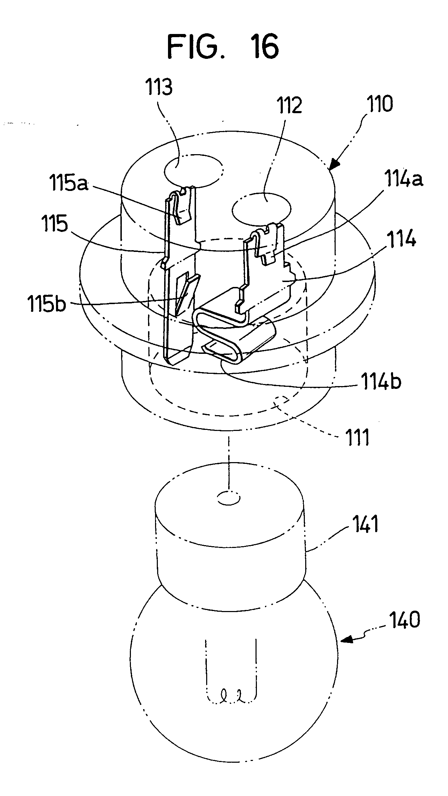

The bulb socket 110, as shown in FIG. 16, comprises: a cylindrical portion 111 which is opened downwardly to receive the electrode section 141 of a lamp 140; a positive terminal hole 112 which is communicated with the central portion of the bottom of the cylindrical portion 111 from above and is adapted to receive the inserting cylinder 121b or 131b; and a negative terminal hole 113 which is communicated with the peripheral portion of the bottom of the cylindrical portion 111 from above and is adapted to receive the inserting cylinder 121b or 131b.

A positive terminal 114 is inserted into the positive terminal hole 112 from the side of the cylindrical portion 111. The upper end portion of the positive terminal 114 is formed into an engaging female terminal portion 114a which is engaged with the fitting terminal portion 122b1 or 132b1 of the junction connector 120 or 130, while the lower end portion of the positive terminal 114 is gently folded to form an elastic contact electrode portion 114b.

A negative terminal 115 is inserted into the negative terminal hole 113 from the side of the cylindrical portion 111. The upper end portion of the negative terminal 115 is formed into an engaging female terminal portion 115a which is engaged with the fitting terminal portion 122b1 or 132b1 of the junction connector 120 or 130, while the lower end portion of the positive terminal 114 has a leaf-spring-shaped contact electrode portion 115b which is raised inwardly from the latter.

In the method of the invention, a jig 150 is employed. The jig 150 can be divided along the longitudinal axis into the right and left parts. Wire holding grooves 151 and 151 semi-circular in section are formed in the side surfaces of the right and left parts of the jig, respectively, which are confronted with each other, so that an electrical wire W is held in the grooves 151. Pairs of connector holding grooves 152 are formed in the right and left parts of the jig 150 at predetermined intervals, to receive the junction connectors 120 and 130. That is, when the right and left parts of the jig are combined together, the connector holding grooves 152 are able to receive the junction connectors 120 and 130. More specifically, the connector holding grooves 152 are so shaped that, when the junction connectors 120 and 130 are inserted in the grooves 152, the wire supporting cylinders 121a and 131a of the housings 121 and 131 are in alignment with the wire holding grooves 151. A pressing board 160 is arranged above the jig 150, in such a manner that it is movable a predetermined distance to and from the jig 150.

Now, a method of manufacturing a sub harness by using those elements will be described.

First, the right and left parts of the jig 150 are combined together. As a result, the connector holding grooves 152 in the right and left parts of the jig 150 are also combined with each other, thus being opened in the jig 150 at the predetermined positions. The housings 121 and 131 of the junction connectors 120 and 130 are inserted into the pairs of connector holding grooves 152 thus opened in the jig 150. In this case, the number of the housings 121 is smaller by one than that of the bulb sockets 110. The housings 121 are inserted into the pairs of connector holding grooves 152 beginning with the first pair of connector holding grooves 152 which is nearest to the end of the jig 50. The housing 131 is inserted into the pair of connector holding grooves 152 next to the pair of connector holding grooves 152 in which the last of the housings 121 has been inserted.

With the housings 121 and 131 inserted in the pairs of connector holding grooves 152, the wire supporting cylinders 121a and 131a are in alignment with the wire holding grooves 151. A common wire, namely, an electrical wire W0 is inserted into the pair of wire holding grooves 151 which have been combined together, opening in both end faces of the jig 150. The wire W0 thus inserted is moved along the wire holding grooves while passing through the wire supporting cylinders 121a of the housings 121, and finally moved into the wire supporting cylinder 131a of the housing 131, where it is detained.

After the electrical wire W0 has been inserted into the jig in the above-described manner, the branch terminals 122 are inserted into the terminal supporting holes 121c of the housings 121 beginning with the wing portions 122a; and the branch terminals 132 is inserted into the terminal supporting holes 131c of the housing 131 beginning with the wing portion 132a. In each of the housings 121, the wire W0 has been inserted into the wire supporting cylinder 121a. Hence, when the branch terminal 122 is inserted into the terminal supporting hole 131c which is perpendicular to the wire supporting cylinder 121, the wing portions 122a are abutted against the wire W0 at right angles. Similarly, the wing portion 132a of the branch terminal 132 is abutted against the wire W0 held in the wire supporting cylinder 131a. Under this condition, the jig 150 supporting the wire W0 and the junction connectors 120 and 130 is set below the pressing board 160, and then the latter 160 is moved downwardly.

The pressing board 160 abuts against the upper end portions of the branch terminals 122 and 132, and it is further moved downwardly. As was described above, the cuts 122a1 have been formed in the wing portions 122a of each of the branch terminals 122 in the direction of movement of the pressing board 160. Hence, as the pressing board 160 is further moved downwardly, the wire W0 is pushed into the cuts 122a1, so that the insulator of the wire W0 is cut by the latter 122a1, and the core wire is pushed in the cuts 122a1. Thus, the core wire is pushed directly against the branch terminal 122; that is, the electrical wire W0 is electrically connected to the branch terminal 122. Similarly, the cut 132a1 formed in the wing portion 132a of the branch terminal 132 cuts the insulator of the electrical wire W0, so that the branch terminal 132 is pushed directly against the core wire. Thus, the branch terminal 132 is electrically connected to the electrical wire W0.

As the branch terminals 122 and 132 are pushed fully into the terminal supporting holes 121c and 131c, respectively, the pawls 122b2 and 132b2 are locked to the walls of the terminal supporting holes 121c and 131c. That is, the branch terminals are press-fitted in the terminal supporting holes, so that they are prevented from being pulled out.

Thereafter, the pressing board 160 is moved upwardly, and the jig 150 is split into the right and left parts, to take out the wire W0. As is apparent from the above description, the wire W0 thus taken out has the junction connectors 120 and 130 at the branching points. That is, the engaging terminals can be readily connected to the wire merely by inserting the junction connectors into the pairs of connector holding grooves 152. In this operation, it is unnecessary to determine the branching points by taking the positions of the junction connectors 120 and 130 into consideration.

Thereafter, in order to improve the water-proof of the wire W0 extended through the wire supporting cylinders 121a and 131a, the open end portions of the latter are welded onto the wire W0, and rubber packing 123 and 133 are mounted on the inserting cylinders 121b and 131b, respectively.

On the other hand, the end portion of each of the electrical wires W1 and W2 is inserted into the wire supporting cylinder 131a of the housing 131, and the branch terminal 132 is pushed into the terminal supporting hole 131c beginning with the wing portion 132a. As a result, the cut 132a1 formed in the wing portion 132a cuts the insulator of the wire, so that the branch terminal is pushed against the core wire. After the branch terminal 132 has been fully pushed into the terminal supporting hole, the open end portion of the wire supporting cylinder 131a is welded on the wire.

Thereafter, the end portions of the electrical wires W0, W1 and W2 are inserted into the connectors. Thus, the fabrication of the aimed wire harness has been accomplished. The wire harness thus fabricated is connected to the bulb sockets 110.

The junction connectors 130 connected to the ends of the electrical wires W1 and W2 are inserted into the positive terminal holes 112 of the bulb sockets 110 beginning with the inserting cylinders 131b. As a result, the fitting terminal portions 132b1 of the branch terminals 132 held in the terminal supporting holes 131c of the junction connectors 130 are engaged with the engaging female terminal portions 114a formed at the upper end portions of the positive terminals 114 held in the positive terminal holes 112 of the bulb sockets 110, respectively.

The junction connectors 120 connected to the electrical wire W0 at the predetermined branching points and the junction connector 130 connected to it at the end, are inserted into the negative terminal holes 113 of the bulb sockets 110 beginning with the inserting cylinders 121b and 131b. As a result, the fitting terminal portions 122b1 of the branch terminals 122 and the fitting terminal portion 132b1 of the branch terminal 132 are engaged with the engaging female terminal portions 115a formed at the upper end portions of the negative terminals 115, respectively. The rubber packing 123 and 133 mounted on the inserting cylinders 121b and 131b are pushed against the inner surfaces of the positive terminal holes 112 and the negative terminal holes 113, thus preventing the entrance of water through the positive terminal holes and the negative terminal holes.

In the above-described embodiment in which the common electrical wire is readily branched merely by connecting the junction connectors 120 and 130 to it, the branch terminal of each of the junction connectors should be made up of the engaging terminal portion and the pressing terminal portion; however, the cut or cuts of the pressing terminal portion may be modified in various manners. Furthermore, the closed-type junction connector 130 may be replaced with the through-type junction connector 120. In the above-described embodiment, the wire harness is connected to the rear combination lamps of a motor vehicle; however, the invention is not limited thereto or thereby. That is, the wire harness may be employed in any case where it is required to connect the power source to a plurality of electrical devices. The rubber packing 123 and 133 may be mounted the junction connectors in advance.

In the above-described embodiment, the junction connectors have the male terminals, and the bulb sockets have the female terminals; however, they may be so modified that the junction connectors have the female terminals, and the bulb sockets have the male terminals.

## Claims

1. A junction connector and bulb socket for mutual connection, comprising:
a bulb socket (10; 110) having a hole (12, 13; 112, 113);
a junction connector (20; 30; 120; 130) comprising a branch terminal (22; 32; 42; 122; 132) having a fitting terminal portion (22b1; 32b1; 122b1; 132b1) at one end which is inserted into the hole (12, 13; 112, 113) formed on the bulb socket (10; 110), and a pressing terminal portion (22a; 32a; 122a; 132a) on the other end, said pressing terminal portion (22a; 32a; 122a; 132a) having a cut (22a1; 32a1; 42a1; 122a1; 132a1) which is opened in the direction of axis thereof; and a casing (21; 31; 121; 131) including a wire supporting cylinder (21a; 31a; 121a; 131a) into which an insulated wire (W0, W1, W2) is inserted, and a terminal supporting hole (21c; 31c; 121c; 131c) into which said branch terminal (22; 32; 42; 122; 132) is inserted beginning with said pressing terminal portion (22a; 32a; 122a; 132a), said terminal supporting hole (21c; 31c; 121c; 131c) communicating with said wire supporting cylinder (21a; 31a; 121a; 131a) and making a substantially right angle with said wire supporting cylinder (21a; 31a; 121a; 131a); and
a seal member (23; 33; 123; 133) provided on one of said casing (21; 31; 121; 131) and the hole (12, 13; 112, 113) of said bulb socket (10; 110), wherein when said fitting terminal portion (22b1; 32b1; 122b1; 132b1) is inserted into the hole (12, 13; 112, 113) of the bulb socket (10; 110) a watertight seal is formed between said casing (21; 31; 121; 131) and the bulb socket (10; 110).

2. A junction connector and bulb socket for mutual connection according to claim 1, said cut (22a1; 32a1; 42a1; 122a1; 132a1) of the pressing terminal (22a; 32a; 122a; 132a) comprising:
a parallel portion at the opening of said cut (22a1; 32a1; 42a1; 122a1; 132a1) having a width substantially the same as a diameter of a core wire of the insulated wire (W0, W1, W2); and
a circular hole portion at a deep end of said cut (22a1; 32a1; 42a1; 122a1; 132a1) being slightly larger in diameter than the core wire of the insulated wire (W0, W1, W2).

3. A junction connector and bulb socket for mutual connection according to claim 1, wherein a welding sleeve (21a1; 31a1) in the shape of a circular cylinder section which is smaller in wall thickness than said wire supporting cylinder (21a; 31a; 121a; 131a) extends from an open end of said wire supporting cylinder (21a; 31a; 121a; 131a).

4. A wiring system comprising a wire harness including junction connectors and bulb sockets according to one of the preceding claims for connecting a power source to a plurality of electrical devices comprising:
a common wire (W0, W1, W2) electrically connected to said power source; and
a plurality of junction connectors (20; 30; 120; 130) in accordance with one of the preceding claims for connecting said common wire (W0, W1, W2) to said electrical devices at predetermined positions of said common wire.

5. A wiring system comprising a wire harness according to claim 4, further comprising a connecting terminal (10; 110) having a second fitting terminal portion (14, 15; 114, 115) which is engageable with said first fitting terminal portion (22b1; 32b1; 122b1; 132b1) of said branch terminal (22; 32; 42; 122; 132), said connecting terminal (10; 110) being provided for each of said electrical devices, wherein said power source connected to said common wire (W0, W1, W2) is electrically connected through said branch terminal (22; 32; 42; 122; 132) and said connecting terminal to said electrical device.

6. A method of manufacturing a wiring system according to claim 4 or 5 for electrically connecting a plurality of electrical devices, a wire harness including a common electrical wire (W0, W1, W2) and a plurality of junction connectors (20; 30; 120; 130) each having a branch terminal (22; 32; 42; 122; 132) for connection to a plurality of bulb sockets (10; 110) each having a hole (12, 13; 112, 113), said method comprising the steps of:
providing a jig (150) for holding each of the plurality of junction connectors (20; 30; 120; 130) at a predetermined position for assembly of the wiring system;
arranging each of said branch terminals (22; 32; 42; 122; 132) at the predetermined position of its corresponding junction connector (20; 30; 120; 130), each of said branch terminals (22; 32; 42; 122; 132) having a pressing terminal portion (22a; 32a; 122a; 132a) at one end and a fitting terminal portion (22b1; 32b1; 122b1; 132b1) at the other end; and
laying said common electrical wire (W0, W1, W2) to confront with said pressing terminal portions (22a; 32a; 122a; 132a) of said branch terminals (22; 32; 42; 122; 132) wherein said common electrical wire (W0, W1, W2) is inserted into a wire supporting cylinder (21a; 31a; 121a; 131a) of a casing (21; 31; 121; 131) of said junction connector (20; 30; 120; 130); and
pushing said pressing terminal portions (22a; 32a; 122a; 132a) of said branch terminals (22; 32; 42; 122; 132) by a device (160) through a terminal supporting hole (21c; 31c; 121c; 131c) of said casing (21; 31; 121; 131) which is in communication with said wire supporting cylinder (21a; 31a; 121a; 131a) towards said common electrical wire (W0, W1, W2) to connect said pressing terminal portions (22a; 32a; 122a; 132a) of said branch terminals (22; 32; 42; 122; 132) with said common electrical wire (W0, W1, W2)
inserting said fitting terminal portions (22b1; 32b1; 122b1; 132b1) of said junction connectors (20; 30; 120; 130) into said holes (12, 13; 112, 113) of said bulb sockets (10; 110) wherein seal members (23; 33; 123; 133) are provided on one of said casings (21; 31; 121; 131) of said junction connectors (20; 30; 120; 130) and said holes (12, 13; 112, 113) of said bulb sockets (10; 110) to form a watertight seal between said casings (21; 31; 121; 131) and said bulb sockets (10; 110).

## Patentansprüche

1. Anschlußverbinder und Fassung zur gegenseitigen Verbindung, welche aufweisen:
eine Fassung (10; 110) mit einer Öffnung (12, 13; 112, 113);
einen Anschlußverbinder (20; 30; 120; 130),
welcher einen Verzweigungsanschluß (22; 32; 42; 122; 132) mit einem Einpaßanschlußabschnitt (22b1; 32b1; 122b1; 132b1) an einem Ende aufweist, welches in die Öffnung (12, 13; 112, 113) eingesetzt ist, welche an der Fassung (10; 110) ausgebildet ist, und einen Preßanschlußabschnitt (22a; 32a; 122a; 132a) an dem anderen Ende aufweist, wobei der Preßanschlußabschnitt (22a; 32a; 122a; 132a) eine Schneide (22a1; 32a1; 42a1; 122a1; 132a1) aufweist, welche in Richtung deren Achse geöffnet ist; und ein Gehäuse (21; 31; 121; 131) aufweist; welches einen Kabelstützzylinder (21a; 31a; 121a; 131a), in welchen ein isoliertes Kabel (W0, W1, W2) eingesetzt ist, und eine Anschlußstützöffnung (21c; 31c; 121c; 131c) aufweist, in welche der Verzweigungsanschluß (22; 32; 42; 122; 132) beginnend mit dem Preßanschlußabschnitt (22a; 32a; 122a; 132a) eingesetzt ist, wobei die Anschlußstützöffnung (21c; 31c, 121c; 131c) mit dem Kabelstützzylinder (21a; 31a; 121a; 131a) in Verbindung ist und einen im wesentlichen rechten Winkel mit dem Kabelstützzylinder (21a; 31a; 121a; 131a) bildet; und
ein Dichtelement (23; 33; 123; 133,) welches an dem Gehäuse (21; 31; 121; 131) oder der Öffnung (12, 13; 112, 113) der Fassung (10; 110) vorgesehen ist, wobei, wenn der Einpaßanschlußabschnitt (22b1; 32b1; 122b1; 132b1) in die Öffnung (12, 13; 112, 113) der Fassung (10; 110) eingesetzt ist, eine wasserdichte Abdichtung zwischen dem Gehäuse (21; 31; 121; 131) und der Fassung (10; 110) ausgebildet ist.

2. Anschlußverbinder und Fassung zur gegenseitigen Verbindung gemäß Anspruch 1, wobei die Schneide (22a1; 32a1; 42a1; 122a1; 132a1) des Preßanschlusses (22a; 32a; 122a; 132a) aufweist:
einen parallelen Abschnitt an der Öffnung der Schneide (22a1; 32a1; 42a1; 122a1; 132a1), welche im wesentlichen eine Weite aufweist, die gleich einem Durchmesser eines Kernkabels des isolierten Kabels (W0, W1, W2) ist; und
einen kreisförmigen Öffnungsabschnitt an einem tiefer gelegenen Ende der Schneide (22a1; 32a1; 42a1; 122a1; 132a1), welche im Durchmesser geringfügig größer ist als das Kernkabel des isolierten Kabels (W0, W1, W2).

3. Anschlußverbinder und Fassung zur gegenseitigen Verbindung gemäß Anspruch 1, wobei sich eine Schweißhülse (21a1; 31a1) in der Form eines kreisförmigen Zylinderabschnitts, welcher in Bezug auf die Wandstärke kleiner ist als der Kabelstützzylinder (21a; 31a; 121a; 131a), von einem offenen Ende des Kabelstützzylinders (21a; 31a; 121a; 131a) erstreckt.

4. Verkabelungssystem, welches einen Kabelbaum aufweist, der Anschlußverbinder und Fassungen gemäß einem der vorhergehenden Ansprüche zur Verbindung einer Stromquelle mit einer Mehrzahl von elektrischen Vorrichtungen umfaßt, welches aufweist:
ein gemeinsames Kabel (W0, W1, W2), welches mit der Stromquelle elektrisch verbunden ist; und
eine Vielzahl von Anschlußverbindern (20; 30; 120; 130) gemäß einem der vorhergehenden Ansprüche zur Verbindung des gemeinsamen Kabels (W0, W1, W2) zu den elektrischen Vorrichtungen an vorbestimmten Positionen des gemeinsamen Kabels.

5. Verkabelungssystem, welches einen Kabelbaum gemäß Anspruch 4 aufweist, welches ferner einen Verbindungsanschluß (10; 110) mit einem zweiten Einpaßanschlußabschnitt (14, 15; 114, 115) aufweist, welcher mit dem ersten Einpaßanschlußabschnitt (22b1; 32b1; 122b1; 132b1) des Verzweigungsan-schlusses (22; 32; 42; 122; 132) des Verbindungsanschlusses (10; 110) in Eingriff bringbar ist, welcher für jede der elektrischen Vorrichtungen vorgesehen ist, wobei die Stromquelle, welche mit dem gemeinsamen Kabel (W0, W1, W2) verbunden ist, durch den Verzweigungsanschluß (22; 32; 42; 122; 132) und den Verbindungsanschluß zu der elektrischen Vorrichtung elektrisch verbunden ist.

6. Verfahren zur Herstellung eines Verkabelungssystems gemäß Anspruch 4 oder 5 zur elektrischen Verbindung einer Mehrzahl von elektrischen Vorrichtungen, eines Kabelbaums mit einem gemeinsamen elektrischen Kabel (W0, W1, W2) und einer Mehrzahl von Anschlußverbindern (20; 30; 120; 130), wobei jeder einen Verzweigungsanschluß (22; 32; 42; 122; 132) zur Verbindung zu einer Mehrzahl von Fassungen (10; 110) aufweist, welche eine Öffnung (12, 13; 112, 113) aufweisen, wobei das Verfahren folgende Schritte aufweist:
Bereitstellung einer Einspannvorrichtung (150) zum Festhalten von jedem der Mehrzahl von Anschlußverbindern (20; 30; 120; 130) an einer vorbestimmten Position zum Zusammenbau des Verkabelungssystems;
Anordnung jedes der Verzweigungsanschlüsse (22; 32; 42; 122; 132) an der vorbestimmten Position seines entsprechenden Anschlußverbinders (20; 30; 120; 130), wobei jeder der Verzweigungsanschlüsse (22; 32; 42; 122; 132) einen Preßanschlußabschnitt (22a; 32a; 122a; 132a) an einem Ende und einen Einpaßanschlußabschnitt (22b1; 32b1; 122b1; 132b1) an dem anderen Ende aufweist; und
Verlegen des gemeinsamen elektrischen Kabels (W0, W1, W2), so daß dieses den Preßanschlußabschnitten (22a; 32a; 122a; 132a) der Verzweigungsanschlüsse (22; 32; 42; 122; 132) gegenüberliegt, wobei das gemeinsame elektrische Kabel (W0, W1, W2) in einen Kabelstützzylinder (21a; 31a; 121a; 131a) eines Gehäuses (21; 31; 121; 131) des Anschlußverbinders (20; 30; 120; 130) eingesetzt ist; und
Drücken der Preßanschlußabschnitte (22a; 32a; 122a; 132a) der Verzweigungsanschlüsse (22; 32, 42, 122, 132) mittels einer Vorrichtung (160) durch eine Anschlußstützöffnung (21c; 31c; 121c; 131c) des Gehäuses (21; 31; 121; 131), welches mit dem Kabelstützzylinder (21a; 31a; 121a; 131a) in Verbindung ist, in Richtung des gemeinsamen elektrischen Kabels (W0, W1, W2), um die Preßanschlußabschnitte (22a; 31a; 122a; 132a) der Verzweigungsanschlüsse (22; 32; 42; 122; 132) mit dem gemeinsamen elektrischen Kabel (W0, W1, W2) zu verbinden;
Einsetzen der Einpaßanschlußabschnitte (22b1; 32b1; 122b1; 132b1) der Anschlußverbinder (20; 30; 120; 130) in die Öffnungen (12, 13; 112, 113) der Fassungen (10; 110), wobei die Dichtelemente (23; 33; 123; 133) an den Gehäusen (21; 31; 121; 131) der Anschlußverbinder (20; 30; 120; 130) und der Öffnungen (12, 13; 112, 113) der Fassungen (10; 110) vorgesehen sind, um eine wasserdichte Abdichtung zwischen den Gehäusen (21; 31; 121; 131) und den Fassungen (10; 110) zu bilden.

## Revendications

1. Connecteur de jonction et douille d'ampoule pour raccordement mutuel, comportant :
une douille d'ampoule (10; 110) ayant un trou (12, 13; 112, 113);
un connecteur de jonction (20; 30; 120; 130) comportant une borne de branchement (22; 32; 42; 122; 132) ayant une partie de borne de raccordement (22b1; 32b1; 122b1; 132b1) à une extrémité qui est insérée dans le trou (12, 13; 112, 113) formé sur la douille d'ampoule (10; 110), et une partie de borne de pression (22a; 32a; 122a; 132a) sur l'autre extrémité, ladite partie de borne de pression (22a; 32a; 122a; 132a) ayant une découpe (22a1; 32a1; 42a1; 122a1; 132a1) qui est ouverte dans la direction de son axe; et un boîtier (21; 31; 121; 131) comprenant un cylindre de support de fil (21a; 31a; 121a; 131a) dans lequel est inséré un fil isolé (W0, W1, W2), et un trou de support de borne (21c; 31c; 121c; 131c) dans lequel ladite borne de branchement (22; 32; 42; 122; 132) est insérée en commençant avec ladite partie de borne de pression (22a; 32a; 122a; 132a), ledit trou de support de borne (21c; 31c; 121c; 131c) communiquant avec ledit cylindre de support de fil (21a; 31a; 121a; 131a) et faisant sensiblement un angle droit avec ledit cylindre de support de fil (21a; 31a; 121a; 131a); et
un élément d'étanchéité (23; 33; 123; 133) prévu sur ledit boîtier (21; 31; 121; 131) ou le trou (12, 13; 112, 113) de ladite douille d'ampoule (10; 110), un joint étanche à l'eau étant formé entre ledit boîtier (21; 31; 121; 131) et la douille d'ampoule (10; 110) quand ladite partie de borne de raccordement (22b1; 32b1; 122b1; 132b1) est insérée dans le trou (12, 13; 112, 113) de la douille d'ampoule (10; 110).

2. Connecteur de jonction et douille d'ampoule pour raccordement mutuel selon la revendication 1, ladite découpe (22a1; 32a1; 42a1; 122a1; 132a1) de la partie de borne de pression (22a; 32a; 122a; 132a) comportant :
une partie parallèle à l'ouverture de ladite découpe (22a1; 32a1; 42a1; 122a1; 132a1) ayant une largeur sensiblement la même qu'un diamètre du fil d'âme du fil isolé (W0, W1, W2); et
une partie de trou circulaire à une extrémité profonde de ladite découpe (22a1; 32a1; 42a1; 122a1; 132a1) étant légèrement plus grande en diamètre que le fil d'âme du fil isolé (W0, W1, W2).

3. Connecteur de jonction et douille d'ampoule pour raccordement mutuel selon la revendication 1, dans lesquels une gaine de soudage (21a1; 31a1) sous la forme d'une section de cylindre circulaire qui est plus petite en épaisseur de paroi que ledit cylindre de support de fil (21a; 31a; 121a; 131a) s'étend depuis une extrémité ouverte dudit cylindre de support de fil (21a; 31a; 121a; 131a).

4. Système de câblage comportant un faisceau de fil comprenant des connecteurs de jonction et des douilles d'ampoule selon l'une des revendications précédentes afin de raccorder une alimentation à plusieurs dispositifs électriques comportant :
un fil commun (W0, W1, W2) relié électriquement à ladite alimentation; et
plusieurs connecteurs de jonction (20; 30; 120; 130) selon l'une des revendications précédentes destinés à relier ledit fil commun (W0, W1, W2) aux dits dispositifs électriques dans des positions prédéterminées dudit fil commun.

5. Système de câblage comportant un faisceau de fil selon la revendication 4, comportant en outre une borne de connexion (10; 110) ayant une deuxième partie de borne de raccordement (14, 15; 114, 115) qui peut être engagée avec ladite partie de borne de raccordement (22b1; 32b1; 122b1; 132b1) de ladite borne de branchement (22; 32; 42; 122; 132), ladite borne de connexion (10; 110) étant prévue pour chacun desdits dispositifs électriques, ladite alimentation reliée au dit fil commun (W0, W1, W2) étant reliée électriquement par l'intermédiaire de ladite borne de branchement (22; 32; 42; 122; 132) et de ladite borne de raccordement au dit dispositif électrique.

6. Procédé de fabrication d'un système de câblage selon la revendication 4 ou 5 destiné à relier électriquement plusieurs dispositifs électriques, un faisceau de câblage comprenant un fil électrique commun (W0, W1, W2) et plusieurs connecteurs de jonction (20; 30; 120; 130) ayant chacun une borne de branchement (22; 32; 42; 122; 132) pour raccordement à plusieurs douilles d'ampoule (10; 110) ayant chacune un trou (12, 13; 112, 113), ledit procédé comportant les étapes consistant à :
prévoir un gabarit (150) destiné à maintenir chacun des différents connecteurs de jonction (20; 30; 120; 130) dans une position prédéterminée pour l'assemblage du système de câblage;
disposer chacune desdites bornes de branchement (22; 32; 42; 122; 132) dans la position prédéterminée de son connecteur de jonction correspondant (20; 30; 120; 130), chacune desdites bornes de branchement (22; 32; 42; 122; 132) ayant une partie de borne de pression (22a; 32a; 122a; 132a) à une extrémité et une partie de borne de raccordement (22b1; 32b1; 122b1; 132b1) à l'autre extrémité; et
placer ledit fil électrique commun (W0, W1, W2) afin de faire face aux dites parties de borne de pression (22a; 32a; 122a; 132a) desdites bornes de branchement (22; 32; 42; 122; 132), ledit fil électrique commun (W0, W1, W2) étant inséré dans un cylindre de support de fil (21a; 31a; 121a; 131a) d'un boîtier (21; 31; 121; 131) dudit connecteur de jonction (20; 30; 120; 130); et
pousser lesdites parties de borne de pression (22a; 32a; 122a; 132a) desdites bornes de branchement (22; 32; 42; 122; 132) avec un dispositif (160) à travers un trou de support de borne (21c; 31c; 121c; 131c) dudit boîtier (21; 31; 121; 131) qui est en communication avec ledit cylindre de support de fil (21a; 31a; 121a; 131a) vers ledit fil électrique commun (W0, W1, W2) afin de raccorder lesdites parties de borne de pression (22a; 32a; 122a; 132a) desdites bornes de branchement (22; 32; 42; 122; 132) au dit fil électrique commun (W0, W1, W2);
insérer lesdites parties de borne de raccordement (22b1; 32b1; 122b1; 132b1) desdits connecteurs de jonction (20; 30; 120; 130) dans lesdits trous (12, 13; 112, 113) desdites douilles d'ampoule (10; 110), des éléments d'étanchéité (23; 33; 123; 133) étant prévus sur l'un desdits boîtiers (21; 31; 121; 131) desdits connecteurs de jonction (20; 30; 120; 130) et desdits trous (12, 13; 112, 113) desdites douilles d'ampoule (10; 110) afin de former un joint étanche à l'eau entre lesdits boîtiers (21; 31; 121; 131) et lesdites douilles d'ampoule (10; 110).
